# EUROPÄISCHE PATENTANMELDUNG

(11) **EP 2 127 737 A2**
(43) Veröffentlichungstag der Anmeldung: **02.12.2009**
(21) Anmeldenummer: 09007017.8
(22) Anmeldetag: 26.05.2009
(51) Int. Cl.: B01F 17/38, C09K 5/06

(54) **Paraffin/Wasser-Emulsion als Kälteträger und Speichermedium sowie Verfahren zu deren Herstellung**

(30) Priorität: 30.05.2008 DE 102008025954
(71) Anmelder: Fraunhofer-Gesellschaft zur Förderung der angewandten Forschung e.V., 80686 München (DE)
(72) Erfinder: Huang, Li, Dipl.-Ing., 46242 Bottrop (DE); Pollerberg, Clemens, Dipl.-Ing., 45699 Herten (DE); Noeres, Peter, Dr.-Ing., 45881 Gelsenkirchen (DE); Doetsch, Christian, Dr.-Ing., 46047 Oberhausen (DE); Sengespeik, Andreas, Dipl.-Ing., 46047 Oberhausen (DE)
(74) Vertreter: Pfenning, Meinig & Partner GbR

(57) **Zusammenfassung**

Die Erfindung bezieht sich auf eine Emulsion, die mindestens eine in mindestens einer kontinuierlichen Phase dispergierte innere Phase enthält, wobei die innere Phase mindestens ein Tensid sowie mindestens einen Keimbildner und die kontinuierliche Phase mindestens ein Thixotropierungsmittel enthält.

## Beschreibung

Die Erfindung betrifft eine Paraffin/Wasser-Emulsion als Kälteträger und Speichermedium, ein Verfahren zu deren Herstellung sowie Verwendungszwecke.

Die Emulsionen werden als Alternative zu Wasser bei kleinen Temperaturspreizungen eingesetzt, wobei sie im Vergleich zu Wasser eine deutlich höhere Energiedichte besitzen. Die höhere Energiedichte der Emulsionen basiert auf dem Phasenwechsel des Paraffins in einem vorgegeben Temperaturbereich. Im Gegensatz zu Wasser kann mit den Emulsionen nicht nur die sensible Wärme über eine Temperaturspreizung, sondern auch die latente Wärme des Phasenwechsels genutzt werden. Der Phasenwechsel des Paraffins kann entsprechend der Anwendung dem gewünschten Temperaturbereich angepasst werden.

Derzeit wird in konventionellen Versorgungsnetzen für Kälte- und Niedertemperaturwärme Wasser als Wärmeträger eingesetzt. In diesen Versorgungsnetzen erfolgt der Wärmetransport ausschließlich als sensible Wärme über eine Temperaturspreizung, wobei die erzielbare Transportkapazität des Netzes direkt proportional zur Wärmekapazität des Wärmeträgers ist.

Die Kältespeicherung erfolgt in der Regel mit Hilfe von Pufferspeichern, in denen der Wärmeträger selbst als Speichermedium genutzt wird. Auch hier ist die Energiedichte des Speichers direkt proportional zur Wärmekapazität des Wärmeträgers. Eine Alternative zu den Pufferspeichern stellen "latente Wärmespeicher" dar. Bei "latenten Wärmespeichern" wird ein Speichermedium eingesetzt, das beim Laden und Entladen des Wärmespeichers einen Phasenwechsel durchläuft. Die beim Phasenwechsel aufgenommene bzw. freigesetzte latente Wärmemenge ergänzt die sensible Wärmemenge und erhöht somit die Wärmekapazität des Speichers. Die Eigenschaften latenter Speichesysteme werden in Fischer, N.; Kübler, R.: Wärmespeicher. Bine Informationspaket. Fachinformationszentrum Karlsruhe, ISBN 3-88585-798-7, Verlag TÜV Rheinland GmbH, Köln 1991, ausführlich beschrieben. Eine Übersicht nutzbarer Materialen mit einem Phasenwechsel im gewünschten Temperaturbereich (im Englischen Phase Change Material, PCM, genannt), ist in Zalba, B.; Marin, J.; Cabeza, L.; Mehling, H.: Review on thermal energy storage with phase change: materials, heat transfer analysis and applications, Applied Thermal Engineering pp. 251-283, 23, 2003, gegeben. Latente Kältespeicher sind seit einigen Jahren marktverfügbar. Diese Speichersysteme besitzen höhere Energiedichten als übliche Kaltwasserspeicher. Das eingesetzte Speichermedium, wie beispielsweise Eis/Wasser oder Paraffine, besitzt jedoch im gefrorenen Aggregatzustand eine schlechtere Wärmeleitfähigkeit, so dass der Speicher eine deutlich verminderte Kälteleistung gegenüber einem Kaltwasserspeicher besitzt. Wird Eis/Wasser als Speichermedium eingesetzt, muss darüber hinaus zum Laden des Speichers die Kältearbeit auf deutlich unter 0 °C bereitgestellt werden, was sich negativ auf die Leistungszahl der Kältemaschine auswirkt.

Seit einigen Jahren werden Kälteträgermedien diskutiert, die in Analogie zu den latenten Speichersystemen ebenfalls die latente Wärme eines Phasenwechsels nutzen und so eine höhere Wärmetransportkapazität gegenüber den konventionellen Medien Wasser oder Sole aufweisen. Allerdings gilt als Restriktion für diese Fluide, dass sie auch nach dem Phasenwechsel des PCMs noch pumpfähig sind. Dies wird durch Kombination eines PCMs mit einer Trägerflüssigkeit erreicht. Das PCM wird dabei im Trägermedium dispergiert und kann so auch im festen Zustand als "Schlamm", den sog. Slurry, gefördert werden. Dementsprechend werden diese Fluide auch Phase Change Slurry (PCS) genannt. Derzeit werden drei Stoffsysteme als PCS vorgeschlagen: Paraffin/Wasser-Emulsionen, Paraffin/Wasser-Suspensionen und Clathrate-Hydrat-Slurry (CHS). Bei diesen Stoffsystemen werden Paraffine bzw. Salze als PCM verwendet. Ein CHS auf Basis von Tetra-n-Butylammoniumbromid (TBAB) als Kälteträger wird in Ogoshi, H.; Tako, S.: Air-conditioning system using clathrate hydrate slurry, JFE Technical Report No. 3, 2004, beschrieben. Der Einsatz dieses Kälteträgers wird bereits in mehreren Anlagen demonstriert. Allerdings ist TBAB ein Gefahrstoff, toxisch und besitzt die höchste Wassergefährdungsklasse. Die notwendigen Konzentrationen an TBAB von mehr als 20 % erfordern gemäß § 19 Wasserhaushaltsgesetz (WHG) zusätzliche anlagentechnische und organisatorische Sicherheitsmassnahmen, die bei der Realisierung eines Kältenetzes berücksichtigt und mit installiert werden müssen. Darüber hinaus weisen CHS einen unerwünschten Unterkühlungseffekt, d.h. der Erstarrungspunkt liegt unter dem Schmelzpunkt, von 1,5 bis 3,5 K auf.

Bei den auf Paraffin basierenden PCS liegt das Paraffin in Mikrokapseln eingeschlossen als wässrige Suspension oder mit Hilfe von Tensiden dispergiert als wässrige Emulsion vor. In der Literatur werden derzeit die in Tabelle 1 gelisteten Paraffin/WasserSysteme diskutiert. Insbesondere die wässrige Emulsion ist aufgrund ihrer einfacheren Herstellung und das Fehlen einer Kapsel, die bei extremen Strömungsverhältnissen beschädigt werden kann, wie in Gschwander, P.; Schossig, P.; Henning, H.-M.: Developement of Phase Changing Slurries based on micro-encapsulated Paraffin, Second Conference on Phase Changing Material & Slurry. Scientific Conference & Business Forum, Yverdon-les-Bains, Switzerland, June 2005, dokumentiert, vielversprechend als Wärmeträgermedium für die Kälteverteilung und Speicherung. Die derzeit diskutierten Emulsionen sind in Wasser dispergierte Paraffine mit Tropfendurchmessern von 5 bis 20 µm. Die Temperatur des Phasenwechsels kann durch Auswahl des Paraffins oder auch durch Mischung verschiedener Paraffinsorten dem späteren Anwendungsbereich angepasst werden. Zur Stabilisierung der Emulsion werden verschiedene Tenside eingesetzt. Die Paraffin/Wasser-Emulsionen sind keine Gefahrstoffe und die bei der Emulsionsherstellung benötigte Tensidkonzentration ist in der Regel so gering, dass das Stoffgemisch der Wassergefährdungsklasse 1, in dieser Klasse sind auch Kühlsolen gelistet, zugeordnet werden kann.

Allerdings weisen die bislang vorgeschlagenen Emulsionen noch eine Reihe von nachteiligen Eigenschaften hinsichtlich des späteren, technischen Einsatzes auf. So liegen Paraffine in der Regel als ein Gemisch aus mehreren Paraffinsorten vor, deren Phasenwechsel im Gegensatz zum Wasser nicht an einem Temperaturpunkt sondern in einem Temperaturbereich stattfindet. Nachteilig ist, dass je nach Paraffingemisch der Temperaturbereich des Phasenwechsels so groß werden kann, dass die Schmelzwärme des Paraffins in der späteren Anwendung nur unzureichend genutzt wird. Darüber hinaus wurden bei praktischen Untersuchungen Unterkühlungseffekte bei der Emulsion festgestellt. Das bedeutet, dass beim Gefrieren des PCMs die Temperatur der Emulsion unter die eigentliche Schmelztemperatur des Paraffins gesenkt werden muss. Diese Absenkung verschlechtert die Leistungszahl der Kältemaschine. Der Unterkühlungseffekt lässt sich bei den derzeit vorgeschlagenen Stoffsystemen mit Hilfe von Additiven nur teilweise unterdrücken.

Ein weiteres Problem der bislang vorgeschlagenen Emulsionen ist deren Stabilität. Je nach Einsatzdauer und Beanspruchung wurden bislang immer Veränderungen bei der Partikelgrößenverteilung festgestellt. Insbesondere die Zunahme der Partikeldurchmesser weist auf eine Instabilität der Emulsion hin. Im schlimmsten Fall kommt es dann zur Aufspaltung der Emulsion in ihre innere und kontinuierliche Phasen. Das Aufspalten der Emulsion wird insbesondere dann beobachtet, wenn die Emulsion im gefrorenen Zustand Scherkräften ausgesetzt wird, wie beispielsweise beim Durchströmen von Pumpen und Armaturen. Für den Langzeiteinsatz der Emulsion ist ferner das sog. Aufrahmen (d.h. das Aufschwimmen der Paraffintröpfchen in der Emulsion) der Emulsion aufgrund des Dichteunterschiedes zwischen Paraffin und Wasser von Bedeutung. Um dies zu vermeiden werden diverse Zuschlagstoffe in der Literatur genannt, mit denen der Dichteunterschied kompensiert werden soll. Angaben zur Konzentration schwanken mit dem vorgeschlagenen Zuschlagstoff. Eine verlässliche Angabe wird jedoch nicht gemacht. Hinsichtlich der Rheologie sind derzeit widersprüchliche Ergebnisse veröffentlicht. So wird auf ein viskoelastisches Verhalten hingewiesen, teilweise die Emulsion als annähernd newtonisch beschrieben. Aufgrund der unterschiedlichen Zusammensetzungsmöglichkeiten der Emulsion ist eine Übertragbarkeit einzelner Messergebnisse nur sehr eingeschränkt gegeben. Eine optimierte Emulsion als Kälteträger, deren wichtigste anwendungstechnische Aspekte befriedigend untersucht sind, wurde bislang noch nicht entwickelt.

Somit ist es Aufgabe der vorliegenden Erfindung, eine Emulsion bereitzustellen, die eine vernachlässigbare Tendenz zur Koaleszenz aufweist und der Temperaturbereich des Phasenwechsels in einem möglichst eng begrenzten Temperaturfenster stattfindet. Ebenso ist es Aufgabe der vorliegenden Erfindung, ein Verfahren zur Herstellung einer derartigen Emulsion bereitzustellen, sowie Verwendungszwecke derartiger Emulsionen zu nennen.

Diese Aufgabe wird bezüglich der Emulsion mit den Merkmalen des Patentanspruchs 1, bezüglich des Verfahrens zur Herstellung der Emulsion mit den Merkmalen des Patentanspruchs 16 sowie bezüglich der Verwendung der Emulsion mit den Merkmalen des Patentanspruchs 17 gelöst. Die weiteren abhängigen Ansprüche stellen dabei vorteilhafte Weiterbildungen dar.

Erfindungsgemäß wird somit eine Emulsion bereitgestellt, enthaltend mindestens eine in mindestens einer kontinuierlichen Phase dispergierte innere Phase, wobei die innere Phase mindestens ein Tensid sowie mindestens einen Keimbildner und die kontinuierliche Phase mindestens ein Thixotropierungsmittel enthält.

Bevorzugt ist hierbei, dass ausschließlich die innere Phase das mindestens eine Tensid und mindestens einen Keimbildner enthält, während ausschließlich die kontinuierliche Phase das mindestens eine Thixotropierungsmittel enthält.

Das erfindungsgemäß vorgeschlagene Stoffsystem stellt eine Emulsion bereit, die sich insbesondere von den bislang bekannten Emulsionen in ihren thermodynamischen und rheologischen Eigenschaften unterscheidet, die für den Einsatz in Kältenetzen als Kälteträger oder Speichermedium verbessert wurden. Die Emulsion selbst ist kein Gefahrstoff und kann der Wassergefährdungsklasse I entsprechend konventionellen Kühlsolen zugeordnet werden.

Die vorgeschlagene Emulsion besitzt eine sehr gute Langzeitstabilität gegenüber anderen Emulsionen, die grundsätzlich zum "Aufrahmen" neigen. Bei bislang diskutierten Emulsionen werden zur Vermeidung des "Aufrahmens" Zuschlagstoffe zum Einstellen der Dichte vorgeschlagen, wie beispielsweise Sand, Ton, Metallstaub und ähnliches. Allerdings kann mit diesen Stoffen das "Aufrahmen" der Paraffintröpfchen nicht völlig ausgeschlossen werden und der stofflich doch sehr große Unterschied zum Paraffin lässt insbesondere hinsichtlich der Stabilität der Emulsion Probleme erwarten. Bei der hier vorgeschlagenen Emulsion wird das "Aufrahmen" mit Hilfe der Thixotropierung unterdrückt. Der Vorteil der Thixotropierung liegt darin, dass das Paraffin mit keinem Fremdstoff verunreinigt werden muss und Probleme hinsichtlich Stabilität von vornherein vermieden werden.

Ein besonderes Problem der Stabilität besitzen die Emulsionen im gefrorenen Zustand unter Einfluss von Scherkräften. Die bislang vorgeschlagenen Emulsionen neigen, nach mechanischer Beanspruchung im gefrorenen Zustand, beim Auftauen dazu, sich in ihre Komponenten aufzuspalten. Vermutlich kommt es zur Zerstörung der gefrorenen Paraffinpartikel bei entsprechender mechanischer Belastung. Die so entstehenden Bruchstücke weisen dann Bruchflächen auf, die nicht schnell genug vom Tensid benetzt werden können und es besteht die Gefahr des Koaleszierens. Wird das Tensid vor dem Emulgieren jedoch nicht in der kontinuierlichen Phase sondern im Paraffin gelöst, kann dieser nachteilige Effekt unterdrückt werden. Die hier vorgeschlagene Emulsion besitzt eine deutlich verbesserte Stabilität. Grundsätzlich lässt sich die Instabilität einer Emulsion durch Änderung der Partikelgrößenverteilung nachweisen, da die Paraffinpartikel in der Emulsion koaleszieren und ihr Durchmesser somit zunimmt. Bei der hier vorgeschlagenen Emulsion lässt sich auch bei häufigem Phasenwechsel und mechanischer Belastung keine Erhöhung der Partikelgrößenverteilung mehr feststellen.

Somit sind die wesentlichen Vorteile, die sich gemäß der erfindungsgemäßen Emulsion ergeben, dass sich im Vergleich zu den aus dem Stand der Technik bekannten Emulsionen deutliche Verbesserungen bezüglich der kritischen Parameter Stabilität und Unterkühlungseffekt ergeben.

Bevorzugte Gewichtsanteile des mindestens einen Tensids in der inneren Phase, bezogen auf das Gesamtgewicht der inneren Phase, liegen dabei zwischen 0,1 bis 15 Gew.-%, bevorzugt von 1 bis 10 Gew.-%, besonders bevorzugt von 2 bis 8 Gew.-%.

Eine weitere vorteilhafte Ausführungsform ist gegeben, wenn das mindestens eine Tensid einen HLB-Wert (hydrophilic-lipophilic-balance) zwischen 8 und 20, bevorzugt zwischen 12 und 18 aufweist.

Insbesondere ist es dabei vorteilhaft, wenn das mindestens eine Tensid ausgewählt ist aus der Gruppe bestehend aus nichtionischen Tensiden, anionischen, kationischen, amphoteren Tensiden sowie Mikro- oder Nanopartikeln, insbesondere grenzflächenaktive Mikro- oder Nanopartikel, und/oder Mischungen hieraus; bevorzugt nichtionischen Tensiden oder Gemischen aus ionischen und nichtionischen Tensiden,

Bevorzugte nichtionische Tenside oder Gemische bestehend aus ionischen und nichtionischen Tensiden sind dabei ausgewählt aus der Gruppe bestehend aus Fettalkoholpolyglycolethern, Fettalkoholalkoxylaten, insbesondere Fettalkoholethoxylaten und/oder Fettalkoholpropoxylaten, Alkylglucosiden, Alkylpolyglucosiden, Alkylphenolethoxylaten, wie z.B. Oktylphenolethoxylaten, Nonylphenolethoxylaten, Cetylstearylalkoholen, Natriumcetylstearylsulfat; Natriumlaurylsulfat und/oder Dodecyldimethylammoniumbromid (DDAB).

Der Gewichtsanteil der inneren Phase, bezogen auf das Gesamtgewicht der Emulsion, beträgt dabei vorteilhaft zwischen 5 bis 55 Gew.-%; somit weist die kontinuierliche Phase bevorzugt einen Gewichtsanteil zwischen 95 und 45 Gew.-% auf.

Insbesondere sind die Stoffe, die für die innere Phase in Frage kommen dabei ausgewählt aus der Gruppe bestehend aus reinen Paraffinen oder Paraffingemischen, Wachsen und/oder Mischungen hieraus.

Die Teilchengröße d₅₀ der dispergierten inneren Phase liegt dabei vorteilhafterweise zwischen 0,5 und 20 µm, bevorzugt zwischen 3 und 10 µm.

Das erfindungsgemäß eingesetzte Thixotropierungsmittel ist in einer vorteilhaften Ausführungsform bezüglich des Gesamtgewichtes der inneren Phase in einem Gewichtsanteil von 0,1 bis 5,0 Gew.-%, bevorzugt von 0,2 bis 2,0 Gew.-%, besonders bevorzugt von 0,5 bis 1,5 Gew.-% enthalten.

Insbesondere ergibt sich eine gute und lagerfähige Emulsion, wenn das Thixotropierungsmittel ausgewählt ist aus der Gruppe bestehend aus hoch dispersen Kieselsäuren sowie Polysaccharide, insbesondere Xanthan und/oder Mischungen heraus.

Durch Einsatz eines Keimbildners kann der Unterkühlungseffekt, der bei allen Emulsionen auftritt, beeinflusst und minimiert werden. Bei den bislang vorgeschlagenen Emulsionen werden ganz unterschiedliche Substanzen als Keimbildner vorgeschlagen. Zu der erforderlichen Menge an Keimbildner werden kaum bzw. nur sehr allgemeine Aussagen getroffen, die für eine konkrete Rezeptur in der Regel nicht übertragbar sind. Bei der hier vorgestellten Emulsion werden verschiedene Alkangemische vorgeschlagen. Die Auswahl und Menge des Alkangemischs erfolgt in Abhängigkeit des als innere Phase eingesetzten Paraffins bzw. Paraffingemisches und der maximal zulässigen Unterkühlung.

Weitere Vorteile ergeben sich, wenn der mindestens eine Keimbildner ausgewählt ist aus der Gruppe bestehend aus Alkanen, Alkenen oder Gemischen aus solchen, mit einem Schmelzpunkt, der mindestens 20 °C über dem Schmelzpunkt der mindestens einen inneren Phase liegt, und/oder Mischungen hieraus.

Bei den als Keimbildnern eingesetzten Alkanen, Alkenen oder Gemischen aus solchen ist es insbesondere vorteilhaft, wenn ihr Schmelzpunkt zwischen 25 und 100 °C, bevorzugt zwischen 30 und 70 °C, besonders bevorzugt zwischen 35 und 60 °C über dem Schmelzpunkt der mindestens einen inneren Phase liegt.

Insbesondere werden hierzu längerkettige Alkane, Alkene oder Gemische aus solchen eingesetzt, wobei die Kettenlänge dieser Kohlenwasserstoffe hierbei bevorzugt 20 Kohlenstoffatome und mehr aufweist.

Bezüglich des Gesamtgewichtes der inneren Phase wird der Keimbildner dabei vorteilhaft in einem Gewichtsverhältnis von 1 bis 15 Gew.-%, bevorzugt von 2 bis 10 Gew.-%, besonders bevorzugt von 3 bis 5 Gew.-% eingesetzt.

Besonders vorteilhafte Emulsionen ergeben sich, wenn die kontinuierliche Phase Wasser ist.

Erfindungsgemäß wird ebenso ein Verfahren zur Herstellung einer erfindungsgemäßen Emulsion bereitgestellt, bei dem mindestens eine zu dispergierende innere Phase in mindestens einer kontinuierlichen Phase dispergiert wird, wobei vor dem Dispergieren der zu dispergierenden inneren Phase oder der kontinuierlichen Phase, bevorzugt der inneren Phase, mindestens ein Tensid sowie der inneren Phase mindestens ein Keimbildner und der kontinuierlichen Phase vor und/oder nach dem Dispergieren mindestens ein Thixotropierungsmittel zugesetzt wird.

Hinsichtlich der Langzeitstabilität der Emulsion bei der Lagerung wird das Verfahren der Thixotropierung eingesetzt. Mit der Thixotropierung wird die homogene Verteilung der Paraffintröpfchen in der wässrigen Phase auch über einen längeren Zeitraum gewährleistet. Das sog. "Aufrahmen", bei dem Paraffintröpfchen in der wässrigen Phase aufsteigen und agglomerieren können, wird damit verhindert und die Langzeitstabilität der Emulsion bei der Lagerung erhöht.

Ferner wurde festgestellt, dass sich die Stabilität der Emulsion deutlich erhöht, wenn das Tensid vor dem Emulgieren nicht der kontinuierlichen Phase, sondern dem Paraffin zugegeben wird. Emulsionen, die so und unter Verwendung eines geeigneten Tensids hergestellt wurden, zeigten eine verbesserte Stabilität auch bei mechanischer Belastung im gefrorenen Zustand.

Des Weiteren wird die Kristallisation des Paraffins mit Hilfe einer heterogenen Nukleation indiziert, so dass "Unterkühlungseffekte" auf ein Minimum reduziert werden. Die Wahl des Keimbildners für die heterogene Nukleation richtet sich nach dem verwendeten Paraffin. Die erforderliche Menge des Keimbildners bestimmt sich aus der Kombination Paraffin und Keimbildner.

Weiterhin werden erfindungsgemäße Verwendungszwecke der zuvor beschriebenen Emulsion bereitgestellt, wobei diese insbesondere als Kälte- und/oder Wärmeträger und/oder Speichermedium für thermische Energie Verwendung finden.

Die vorliegende Erfindung wird anhand der nachfolgenden Ausführungen sowie der beigefügten Figuren näher erläutert, ohne die Erfindung auf die dort genannten speziellen Parameter zu beschränken.

Dabei zeigen
- Figur 1: Aufrahmen der Vergleichsemulsionen mit unterschiedlicher Xanthan-Konzentration der kontinuierlichen Phase während (nach) einer Lagerzeit von 1 Woche (von links beginnend 0; 0,05; 0,1; 0,2; 0,3 und 0,4 Gew.-% Xanthan),
- Figur 2: die Viskosität der Vergleichsemulsionen als Funktion der Scherrate,
- Figur 3: den kritischen Durchmesser des Kristallisationskeims in Abhängigkeit der Unterkühlung für verschiedene Grenzflächenspannungen,
- Figuren 4a und 4b: DSC-Messungen der Mischungen Paraffin mit unterschiedlichen Alkangemischen als Keimbildner mit einer Aufheiz- und Abkühlgeschwindigkeit von 5 K/min,
- Figur 5: Partikelgrößenverteilung einer Emulsion mit 30 Gew.-% Paraffin und einem Schmelzpunkt von 10 °C und 1,5 Gew.-% Tensid nach Emulgieren und nach ca. 1-jähriger Lagerung sowie
- Figur 6: DSC-Messung der Emulsion mit und ohne Keimbildner mit einer Aufheiz- und Abkühlgeschwindigkeit von 2 K/min.

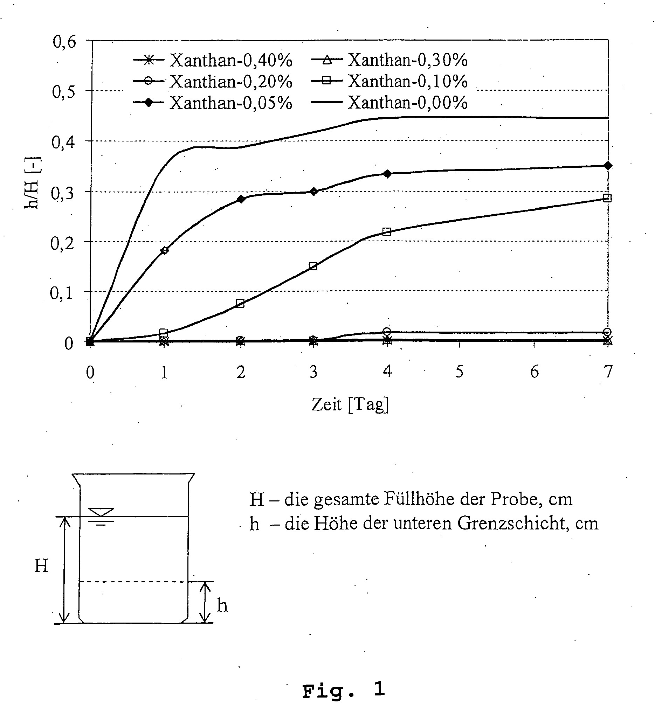

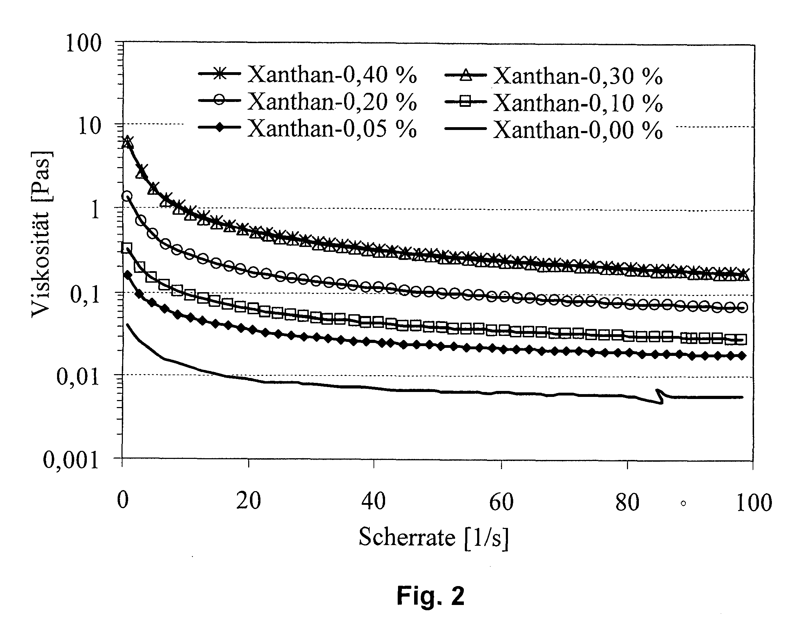

Zur Thixotropierung wird der kontinuierlichen Phase (z.B. Wasser) der Emulsion ein Thixotropierungsmittel auf Basis von Xanthan beigemischt. Die Thixotropierung erzeugt eine Vernetzung im Fluid, mit der die Paraffintröpfchen fixiert, die Viskosität angehoben und das "Aufrahmen" der Paraffintröpfchen verhindert wird. Treten Scherkräfte im Fluid auf, wird diese Vernetzung wieder aufgebrochen, wobei nicht die Höhe der Scherkraft entscheidend ist, sondern die Zeitdauer ihrer Einwirkung. Dennoch verbleibt die Viskosität der Emulsion auf einem höheren Niveau als eine Emulsion ohne Thixotropierung hätte. Eine höhere Viskosität bedeutet höhere Druckverluste beim späteren Einsatz, so dass die Konzentration an Xanthan möglichst gering zu wählen ist. Zur Ermittlung der optimalen Menge Xanthan wurden Emulsionsproben mit unterschiedlichen Konzentrationen an Xanthan hergestellt und das "Aufrahmen" über einen längeren Zeitraum, wie in Figur 1 gezeigt, beobachtet sowie die Viskosität, entsprechend dem Diagramm der Figur 2, gemessen. Die Konzentration sollte demzufolge mindestens bei ca. 0,2 Gew.-% liegen.

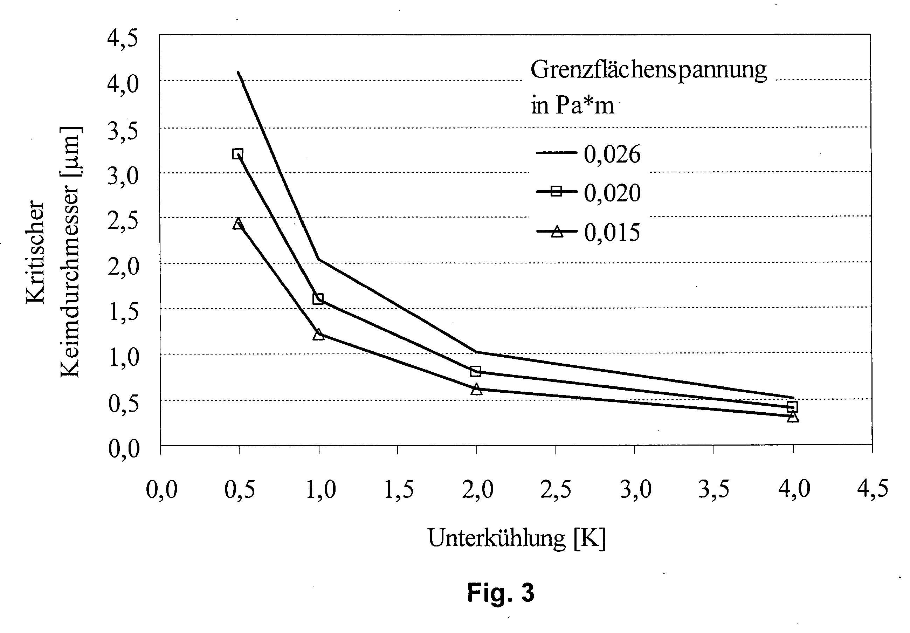

Als Emulgator wird ein nichtionisches Tensid vor dem Emulgieren, im Gegensatz zu den üblichen Herstellungsverfahren, im Paraffin und nicht in der kontinuierlichen Phase gelöst. Zum Einsatz kommt ein Tensid mit einem hohen HLB-Wert auf Basis von Cety-StearylAlkohol. Die Bindung des hydrophilen Teils des Tensids zum Wasser erfolgt aufgrund der Wasserstoffbrückenbindungen. Zwischen dem lipophilen Teil des Tensids und dem Paraffin wirken Van-der-Waals-Kräfte. Emulsionen die entsprechend hergestellt wurden, zeigten gegenüber Emulsionen, die nach den üblichen Verfahren hergestellt wurden, eine verbesserte Stabilität, insbesondere auf mechanische Belastungen im gefrorenen Zustand. Die Dispergierparameter und die Tensidkonzentration sollten so gewählt werden, dass sich beim Emulgieren eine Partikelgröße d₅₀ von 3 bis 7 µm einstellt. Besitzt die Emulsion zu kleine Partikel, tritt ein zu starker Unterkühlungseffekt auf, der mit zusätzlichen Keimbildnern nur teilweise kompensiert werden kann. Dieser Unterkühlungseffekt tritt auf, da das Partikel nur ein begrenztes Volumen besitzt, in dem sich ein Kristallisationskeim bilden kann. Der Kristallisationskeim initiiert die Kristallisation und startet somit den Phasenwechsel. Damit sich überhaupt ein Kristallisationskeim bilden kann, muss der Partikeldurchmesser größer sein, als der kritische Durchmesser des Kristallisationskeims. Der kritische Durchmesser des Kristallisationskeims ist eine Funktion der Temperatur und sinkt mit zunehmender Temperatur ab. Dies führt dazu, dass kleinere Partikel stärker unterkühlt werden müssen, um den Phasenwechsel zu starten. Der Zusammenhang kritischer Durchmesser des Kristallisationskeims zur Unterkühlung kann aus dem Diagramm der Figur 3 entnommen werden. Sind die Partikel zu groß, wird die Stabilität der Emulsion herabgesetzt.

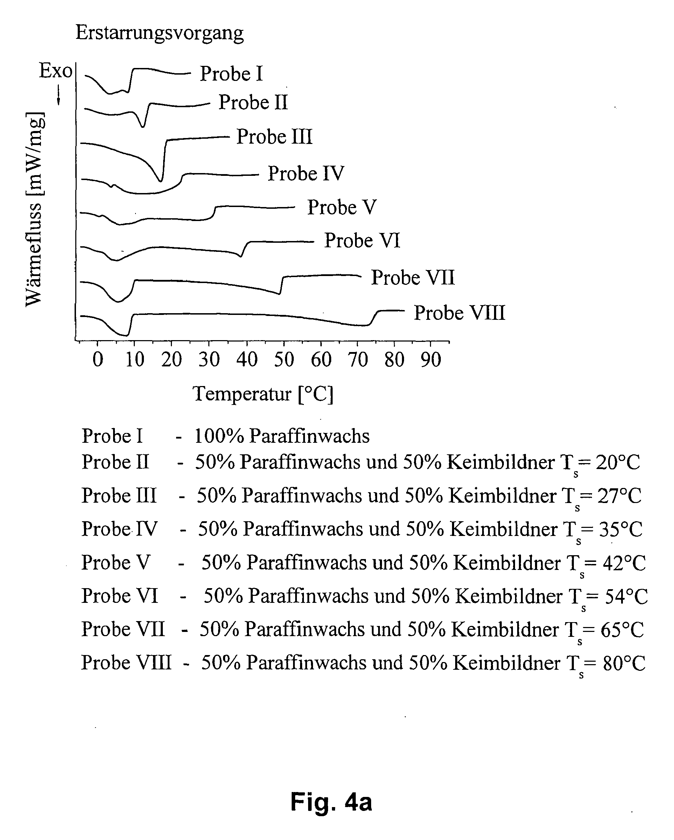

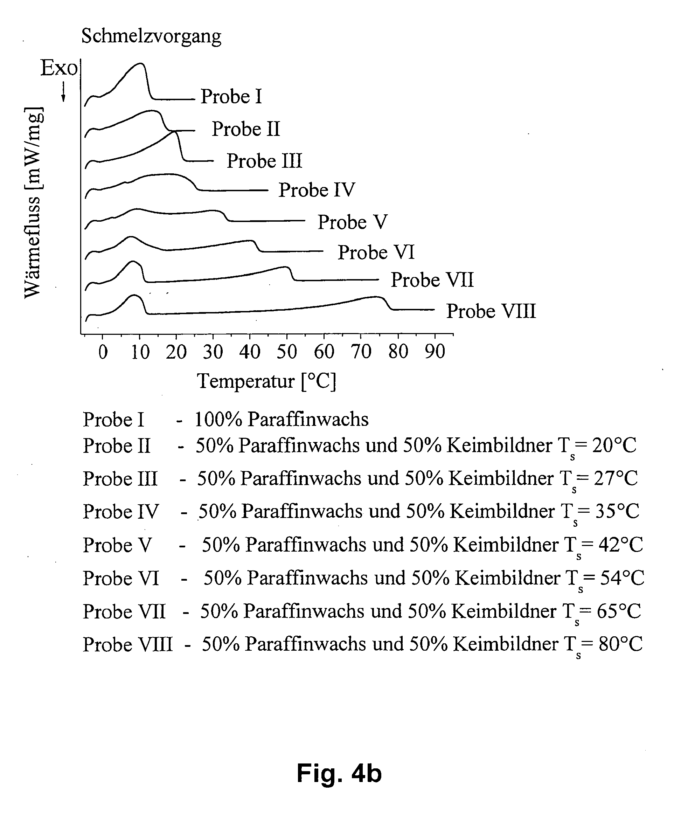

Um den Unterkühlungseffekt der Emulsion zu beeinflussen und zu minimieren, werden "längerkettige" Alkangemische als Keimbildner mit dem Paraffin gemischt. Diese "längerkettigen" Alkangemische werden hier nachfolgend mit der Temperatur ihres Phasenwechsels benannt. Grundsätzlich eignet sich ein "längerkettiges" Alkan, Alken oder Gemisch aus solchen als Keimbilder, wenn sich der Temperaturbereich des Phasenwechsels des Alkans, Alkens oder Gemisches aus solchen deutlich vom Temperaturbereich des Phasenwechsels des Paraffins unterscheidet. Dies kann beispielsweise mit Hilfe einer dynamischen Differenzkalorimetrie (DSC-Messung) überprüft werden. In den Diagrammen einer entsprechenden Messungen, wie in den Figuren 4a und 4b, sollten die beiden Schmelzbereiche als deutlich getrennte Peaks auftreten. Für die Dosierung des Keimbildners gelten dann die beiden folgenden Grundsätze:
1. Je länger die Kohlenstoffkette des Alkangemisches, desto geringer die benötigte Stoffmenge desselben und
2. je größer die Konzentration an Keimbildner, desto größer der Temperaturbereich des Phasenwechsels.

Entsprechend der beiden Grundsätze wäre ein Alkangemisch mit möglichst hohem Schmelzpunkt zu wählen und gleichzeitig die Konzentration möglichst gering zu halten. Um die konkrete Mindestmenge an Keimbildner zu ermitteln, sind weitere DSC-Messungen durchzuführen, wobei das Paraffin mit unterschiedlichen Konzentrationen des Alkangemisches versetzt wird. In der Regel kann eine Konzentration kleiner 5 Gew.-% Keimbildner gewählt werden.

### Ausführungsbeispiel

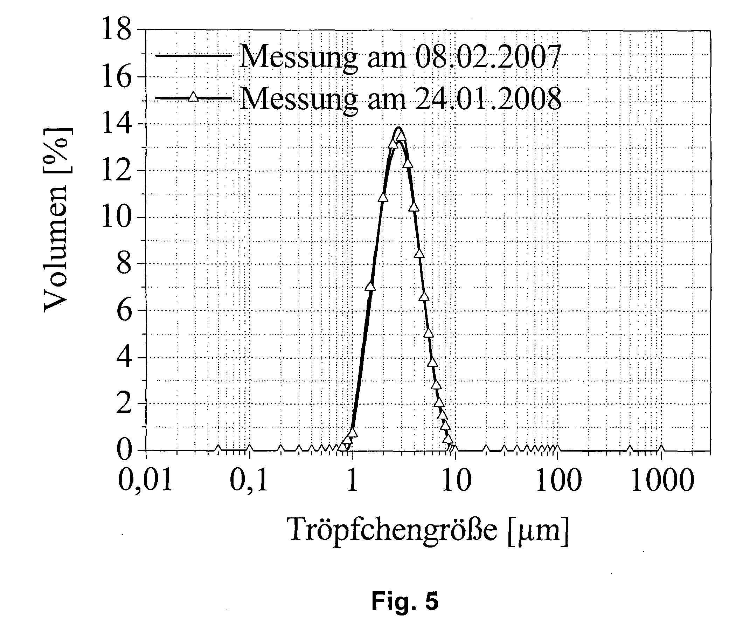

Bei dem Ausführungsbeispiel handelt es sich um eine wässrige Emulsion mit einem Paraffinanteil von 30 Gew.-%. Als PCM wird ein Paraffingemisch mit einem Schmelzpunkt von 10 °C verwendet, dessen Zusammensetzung aus Tabelle 2 entnommen werden kann. Alternativ kann aber auch ein technisch reines Paraffin, z.B. Tetradekan oder Hexadekan, als PCM verwendet werden. Das hat den Vorteil, dass der Temperaturbereich des Phasenwechsels schmäler wird und so gegebenenfalls optimal an spezielle Anwendungen angepasst werden kann. Für die Thixotropierung werden der kontinuierlichen Phase 0,2 Gew.-% Xanthan beigemischt sowie das Paraffin vor dem Emulgieren mit 1,5 Gew.-% Cetyl-Stearyl-Alkohol (Tensid) und 1,5 Gew.-% Alkangemisch mit einem Schmelzpunkt von 54 °C (Keimbildner) versetzt. Für den Emulgierprozess wird eine Rotor-Stator-Maschine bei 20.000 U/min für die Dauer von 10 min eingesetzt. Nach dem Emulgieren weist die Emulsion die im Diagramm der Figur 5 dargestellte Partikelgrößenverteilung auf, ebenfalls ist dem Diagramm die Partikelgrößenverteilung der gealterten Emulsion zu entnehmen.

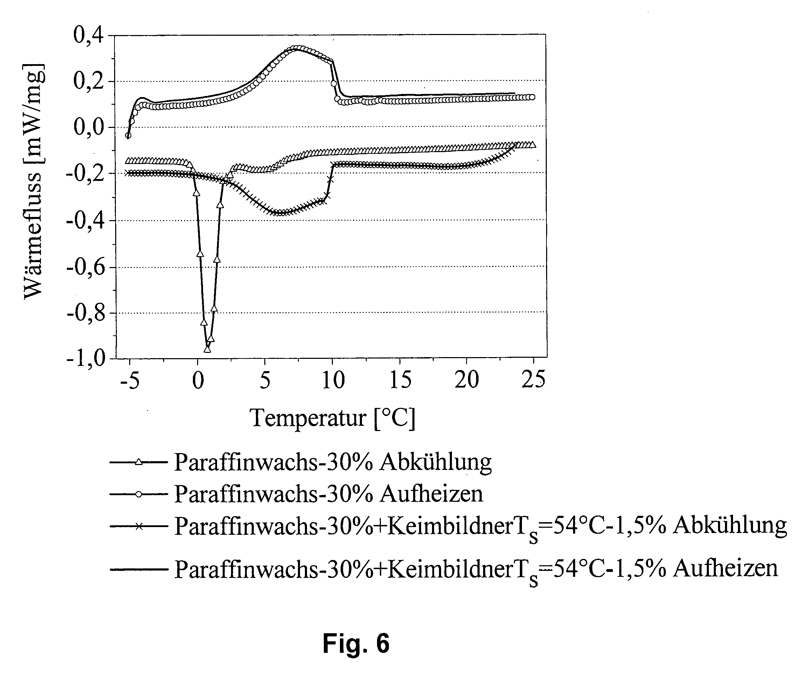

Zur Bestimmung des notwendigen Alkangemisches, das als Keimbildner für die heterogene Nukleation eingesetzt werden soll, werden vor der Herstellung der Emulsion DSC-Messungen an Gemischproben mit dem hier genannten Paraffin und unterschiedlichen Alkangemischen als Keimbildner durchgeführt. Entsprechend der oben erörterten Zusammenhänge und unter Berücksichtigung der DSC-Messungen, die in Figuren 4a und 4b dargestellt sind, wären für das hier verwendete Paraffin die Alkangemische mit den Schmelztemperaturen 54, 65 und 80 °C als Keimbildner geeignet. Anschließend wird mit Hilfe weiterer DCS-Messungen die notwendige Menge an Keimbildner bestimmt. Für das hier verwendete Paraffin und die untersuchten Alkangemische ergeben sich die in Tabelle 3 ermittelten Mindestmengen. Im Ausführungsbeispiel wird das Alkangemisch mit der Schmelztemperatur 54 °C verwendet. Die Menge Keimbildner beträgt 5 Gew.-%, bezogen auf die Menge Paraffin. Figur 6 zeigt die DSC-Messung der Emulsion ohne und mit Keimbildner bei einer Aufheiz- und Abkühlgeschwindigkeit von 2 K/min. Der Unterkühlungseffekt kann mit Hilfe des Keimbildners deutlich reduziert werden.

**Tabelle 1**

| Paraffin/Wasser-Systeme als Kälteträger | | | | | |
|---|---|---|---|---|---|
| Nr | Art des PCS | PCM | Tensid/ Hüllmaterial | Konzentration (Gew.-%) | Literat. |
| 1. | formstabile Paraffinpellets | Pentacosan C₂₅H₅₂ | HDPE (High density Polyethylen) | PCM: 74 Gew.-% HDPE: 26 Gew.-% | Inaba, H. : The current trends in research and development on phase change material slurry, Proceeding of the phase change material and slurry scientific conference & Business Forum, Yverdon-les-Bains, Switzerland, 23-26 April, 2003 |
| 2. | formstabile Paraffin-pellets | Paraffin mit 12-15 C-Atomen | SEBS (Styren-butadien-styren) | PCM: 75 Gew.-% SEBS: 25 Gew.-% | Royon, L.; Perrot, P.; Guiffant, G.; Fraoua, S.: Physical properties and thermorheological behaviour of a dispersion having cold latent heat-storage material, Energy Conver. Mgmt Vol. 39, No. 15, pp. 1529-1535, 1998 |
| 3. | Emulsion | Tetradekan C₁₄H₃₀ | Polyethylenglycol-stearylether (nichtionisch) und Alkylbezenesulfanat (anionisch) (10:1) | Tetradekan: 5-40 % | Inaba, H.; Morita, S.; Nozu, S.: Fundamental study of cold heat-storage system of o/w-type emulsion having cold latent-heat-dispersion material. Part 1. Heat Transfer Japanese Research. Vol. 23, Nr.3, S. 292, 1994 |
| 4. | Emulsion | Hexadekan | Triton X-100 | Hexadekan: 10-70 % | Clarksean, R.: Development of a PCM slurry and examination of particle statistics, Proceeding of the phase change material and slurry scientific conference & Business Forum, Yverdon-les-Bains, Switzerland, 23-26, April, 2003 |
| 5. | Emulsion | Tetradekan C₁₄H₃₀ | Tensid | -- | Yang, R.; Xu, H.; Zhang, Y.P.: Preparation, physical property and thermal physical property of phase change micro-capsule slurry and phase change emulsion, Solar Energy Material & Solar Cells 80 (2003), pp. 405-416, 2003 |
| 6. | Emulsion PCS- | Tetradekan C₁₄H₃₀ | -- | Tetradekan: 10-20 Gew.-% | Pollerberg, C.; Noeres, P.; Doetsch, C.: Systems in cooling and cold supply networks, Second Conference on Phase Change Material & Slurries, Switzerland, 15-17 June, 2005 |
| 7. | Emulsion | Tetradekan C₁₄H₃₀ | 32,4 Gew.-% | -- Span-60 und Gew.-% Tween-60 | Xu, H.; Yang, R.; Huang, Y.P.; Lin, J.; Wang, X.: Thermal physical properties and key influence factors of phase change emulsion, Chinese Science Bulletin, 50 (1), pp. 88-93, 2005. |
| 8. | Suspension | n-Nonadekan | -- | n-Nonadekan: 10-40 Gew.-% | Inaba, H.: The current trends in research and development on phase change material slurry, Proceeding of the phase change material and slurry scientific conference & Business Forum, Yverdonles-Bains, Switzerland, 23-26 April, 2003 |
| 9. | Suspension | Hexadekan methacrylat) | PMMA (Polymethyl- | Hexadekan: 10-40 Gew.-% | Geschwander, S.; Schossig, P.; Henning, H.-M.: Development of phase change slurries based on microencapsulated paraffin, Proceeding of the Second Conference on Phase Change Material and Slurry, Yverdon-les-Bains, Switzerland, June 15-17, 2005. |
| 10 | Suspension | Tetradekan C₁₄H₃₀ | PMMA (Polymethyl- methacrylat) oder PEMA (Polyethyl-methacrylat) | Tetradekan: 5-40 Gew.-% | Yang, R.; Xu, H.; Zhang, Y.P.: Preparation, physical property and thermal physical property of phase change microcapsule slurry and phase change emulsion, Solar Energy Material & Solar Cells 80 (2003), pp. 405-416, 2003 |
| 11 | Suspension PCS- C₁₄H₃₀ | Tetradekan | -- | Tetradekan: 10-30 Gew.-% | Pollerberg, C.; Noeres, P.; Doetsch, C.: Systems in cooling and cold supply networks, Second Conference on Phase Change Material & Slurries, Switzerland, 15-17 June, 2005 |

**Tabelle 2**

| Zusammensetzung des Paraffins mit Schmelzpunkt 10 °C | |
|---|---|
| Konzentration (Gew.-%) | Alkan-Name |
| 0,12 | Tridekan |
| 21,02 | Tetradekan |
| 27,86 | Pentadekan |
| 13,76 | Hexadekan |
| 6,71 | Heptadekan |
| 18,55 | Oktadekan |
| 8,88 | Nonadekan |
| 2,33 | Eicosan |
| 0,3 | Heneicosan |

**Tabelle 3**

| Keimbildner und die min. Konzentration bezogen auf das Paraffin mit Schmelzpunkt 10 °C. | |
|---|---|
| Alkangemisch | min. Konzentration (Gew.-%) bezogen auf das Paraffin |
| Schmelzpunkt 20 °C | Kein Keimbildner |
| Schmelzpunkt 27 °C | Kein Keimbildner |
| Schmelzpunkt 35 °C | 8-10 %, nicht optimal |
| Schmelzpunkt 42 °C | 6-10 %, nicht optimal |
| Schmelzpunkt 54 °C | 5 %, optimal |
| Schmelzpunkt 65 °C | 4(5) %, optimal |
| Schmelzpunkt 80 °C | 3(4) %, optimal |

## Patentansprüche

1. Emulsion, enthaltend mindestens eine in mindestens einer kontinuierlichen Phase dispergierte innere Phase, **dadurch gekennzeichnet, dass** die innere Phase mindestens ein Tensid sowie mindestens einen Keimbildner und die kontinuierliche Phase mindestens ein Thixotropierungsmittel enthält.

2. Emulsion nach Anspruch 1, **dadurch gekennzeichnet, dass** das mindestens eine Tensid in der inneren Phase, bezogen auf das Gesamtgewicht der inneren Phase mit einem Gewichtsanteil von 0,1 bis 15 Gew.-%, bevorzugt von 1 bis 10 Gew.-%, besonders bevorzugt von 2 bis 8 Gew.-% enthalten ist.

3. Emulsion nach einem der vorhergehenden Ansprüche, **dadurch gekennzeichnet, dass** das mindestens eine Tensid einen HLB-Wert (hydrophilic-lipophilic-balance) zwischen 8 und 20, bevorzugt zwischen 12 und 18 aufweist.

4. Emulsion nach einem der vorhergehenden Ansprüche, **dadurch gekennzeichnet, dass** das mindestens eine Tensid ausgewählt ist aus der Gruppe bestehend aus nichtionischen Tensiden, anionischen, kationischen, amphoteren Tensiden sowie Mikro- oder Nanopartikeln, insbesondere grenzflächenaktive Mikro- oder Nanopartikel, und/oder Mischungen hieraus, bevorzugt nichtionischen Tensiden oder Gemischen aus ionischen und nichtionischen Tensiden.

5. Emulsion nach vorhergehendem Anspruch, **dadurch gekennzeichnet, dass** das nichtionische Tensid oder das Gemisch bestehend aus ionischen und nichtionischen Tensiden ausgewählt ist aus der Gruppe bestehend aus Fettalkoholpolyglycolethern, Fettalkoholalkoxylaten, insbesondere Fettalkoholethoxylaten und/oder Fettalkoholpropoxylaten, Alkylglucosiden, Alkylpolyglucosiden, Alkylphenolethoxylaten, wie z.B. Oktylphenolethoxylaten, Nonylphenolethoxylaten, Cetylstearylalkoholen, Natriumcetylstearylsulfat; Natriumlaurylsulfat und/oder Dodecyldimethylammoniumbromid (DDAB).

6. Emulsion nach einem der vorhergehenden Ansprüche, **dadurch gekennzeichnet, dass** die innere Phase am Gesamtgewicht der Emulsion einen Gewichtsanteil von 5 bis 55 Gew.-%, ausmacht.

7. Emulsion nach einem der vorhergehenden Ansprüche, **dadurch gekennzeichnet, dass** die innere Phase ausgewählt ist aus der Gruppe bestehend aus Paraffinen, Paraffingemischen oder Wachsen und/oder Mischungen hieraus.

8. Emulsion nach einem der vorhergehenden Ansprüche, **dadurch gekennzeichnet, dass** die innere Phase eine mittlere Teilchengröße d₅₀ zwischen 0,5 und 20 µm, bevorzugt zwischen 3 und 10 µm aufweist.

9. Emulsion nach einem der vorhergehenden Ansprüche, **dadurch gekennzeichnet, dass** das mindestens eine Thixotropierungsmittel bezüglich des Gesamtgewichts der inneren Phase einen Gewichtsanteil von 0,1 bis 5,0 Gew.-%, bevorzugt von 0,2 bis 2,0 Gew.-%, besonders bevorzugt von 0,5 bis 1,5 Gew.-% ausmacht.

10. Emulsion nach einem der vorhergehenden Ansprüche, **dadurch gekennzeichnet, dass** das mindestens eine Thixotropierungsmittel ausgewählt ist aus der Gruppe bestehend aus hoch dispersen Kieselsäuren sowie Polysaccharide, insbesondere Xanthan und/oder Mischungen hieraus.

11. Emulsion nach einem der vorhergehenden Ansprüche, **dadurch gekennzeichnet, dass** der mindestens eine Keimbildner ausgewählt ist aus der Gruppe bestehend aus Alkanen, Alkenen oder Gemischen aus solchen, mit einem Schmelzpunkt, der mindestens 20 °C über dem Schmelzpunkt der mindestens einen inneren Phase liegt, und/oder Mischungen hieraus, enthält.

12. Emulsion nach vorhergehendem Anspruch, **dadurch gekennzeichnet, dass** die Alkane, Alkene oder Gemische aus solchen einen Schmelzpunkt zwischen 25 und 100 °C, bevorzugt zwischen 30 und 70 °C, besonders bevorzugt zwischen 35 und 60 °C über dem Schmelzpunkt der mindestens einen inneren Phase aufweisen.

13. Emulsion nach einem der beiden vorhergehenden Ansprüche, **dadurch gekennzeichnet, dass** die Alkane, Alkene oder Gemische aus solchen eine Kettenlänge von bevorzugt 20 Kohlenstoffatomen und mehr aufweisen.

14. Emulsion nach einem der Ansprüche 11 bis 13, **dadurch gekennzeichnet, dass** der mindestens eine Keimbildner bezüglich des Gesamtgewichts der inneren Phase in einem Gewichtsverhältnis von 1 bis 15 Gew.-%, bevorzugt von 2 bis 10 Gew.-%, besonders bevorzugt von 3 bis 5 Gew.-% enthalten ist.

15. Emulsion nach einem der vorhergehenden Ansprüche, **dadurch gekennzeichnet, dass** die kontinuierliche Phase Wasser ist.

16. Verfahren zur Herstellung einer Emulsion nach einem der vorhergehenden Ansprüche, bei dem mindestens eine zu dispergierende innere Phase in mindestens einer kontinuierlichen Phase dispergiert wird, **dadurch gekennzeichnet, dass** vor dem Dispergieren der zu dispergierenden inneren Phase oder der kontinuierlichen Phase, bevorzugt der inneren Phase, mindestens ein Tensid sowie der inneren Phase mindestens ein Keimbildner und der kontinuierlichen Phase vor und/oder nach dem Dispergieren mindestens ein Thixotropierungsmittel zugesetzt wird.

17. Verwendung einer Emulsion nach einem der Ansprüche 1 bis 15 als Kälte- und/oder Wärmeträger und/oder Speichermedium für thermische Energie.
